(19) Europäisches Patentamt
European Patent Office
Office européen des brevets

(11) EP 1 296 516 A2

# (12) EUROPÄISCHE PATENTANMELDUNG

(43) Veröffentlichungstag:
**26.03.2003 Patentblatt 2003/13**

(51) Int Cl.7: **H04N 5/21**, H04N 5/14

(21) Anmeldenummer: **02020794.0**

(22) Anmeldetag: **17.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **21.09.2001 DE 10146582**

(71) Anmelder: **Micronas GmbH**
**81539 München (DE)**

(72) Erfinder: **Jostschulte, Klaus**
**44388 Dortmund (DE)**

(74) Vertreter: **Patentanwälte**
**Westphal, Mussgnug & Partner**
**Mozartstrasse 8**
**80336 München (DE)**

## (54) Vorrichtung und Verfahren zur Teilbandzerlegung von Bildsignalen

(57) Die vorliegende Erfindung betrifft eine Vorrichtung und ein Verfahren zur Teilbandzerlegung eines Bildsignals (S), wobei die Vorrichtung folgende Merkmale aufweist:

- eine Kaskade mit n aufeinanderfolgenden Medianfiltern (M1, M2, M3, M4), wobei $n \geq 2$ ist, die jeweils einen Eingang und einen Ausgang aufweisen, wobei dem Eingang eines ersten Medianfilters (M1) das Bildsignal (S) zugeführt ist und wobei der Eingang jedes dem ersten Medianfilter (M1) nachfolgenden Medianfilters (M2, M3, M4) an den Ausgang des jeweils vorherigen Medianfilters (M1, M2, M3) der Kaskade angeschlossen ist,
- wenigstens ein Verknüpfungselement (SUB1, SUB2, SUB3, SUB4), das wenigstens zwei Eingänge und einen Ausgang aufweisen, wobei jedem der Eingänge ein Ausgangssignal eines der Medianfilter (M1, M2, M3, M4) oder das Bildsignal (S) zugeführt ist und wobei an dem Ausgang ein Teilbandsignal (S1, S2, S3, S4) zur Verfügung steht.

FIG 2

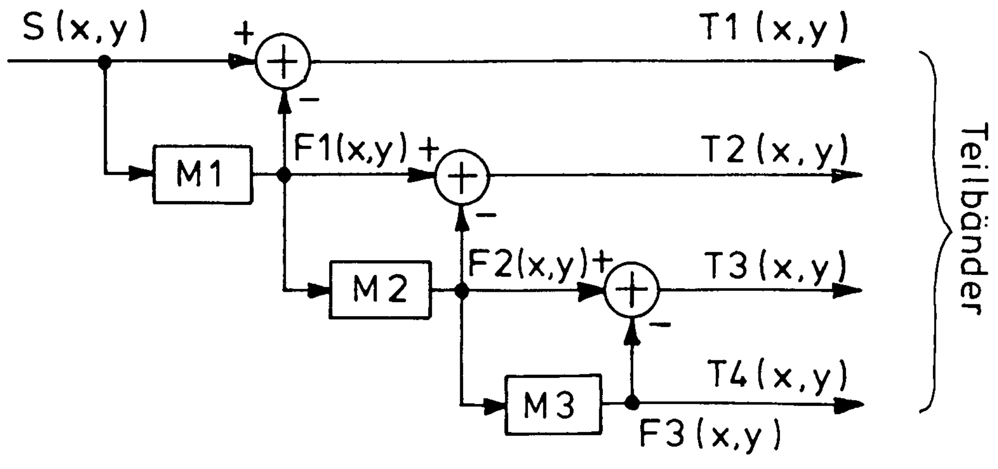


EP 1 296 516 A2

## Beschreibung

Die vorliegende Erfindung betrifft eine Vorrichtung und ein Verfahren zur Teilbandzerlegung bei Bildsignalen.

Zu derartigen Vorrichtungen und Verfahren existiert ein umfangreicher Stand der Technik, der im folgenden kurz dargestellt ist. Aus Gründen der Übersichtlichkeit enthält die Beschreibung nur Verweise auf das jeweilige Dokument in eckigen Klammern. Eine Liste mit vollständigen Angaben der zitierten Dokumente findet sich am Ende der Beschreibung.

Viele Verfahren, die zur örtlichen Beseitigung von Störungen eingesetzt werden, basieren auf einer adaptiven Anwendung linearer örtlicher Operatoren auf die einzelnen Bildpunkte bzw. auf die Signalwerte der Bildpunkte. Beispiele derartiger Verfahren sind in [1], [2], [3] oder [4] beschrieben. Dieses Prinzip der Anwendung linearer örtlicher Operatoren auf einzelne Bildpunkte ist aber nur eingeschränkt mit dem vorhandenen Bildmodell vereinbar - Probleme treten insbesondere an Kanten des Bildes auf -, so dass die Effizienz dieser Verfahren beschränkt ist.

Bei dem in [5] beschriebenen Verfahren erfolgt eine hierarchische, stufenweise Verarbeitung, bei der abhängig von den Frequenzanteilen im Signal Schwellwerte gesetzt werden, durch die eine Rauschreduktion gesteuert wird.

Darüber hinaus gibt es Verfahren, die auf einer Teilbandzerlegung des Bildsignals mit anschließender Verarbeitung der Subbänder basieren. Insbesondere der Entwurf geeigneter Teilbandzerlegungsverfahren stand in den vergangenen Jahren im Mittelpunkt vieler Arbeiten. Zu den linearen Zerlegungsverfahren gehören neben einfachen linearen Trennfiltern, die in [6] beschrieben sind, auch Pyramidenzerlegungsverfahren, die in [7] beschrieben sind, und Verfahren, die auf einer Wavelet-Zerlegung des Signals basieren.

Allerdings sind lineare Zerlegungsverfahren aufgrund ihrer Eigenschaften im Kantenbereich nur bedingt für eine Rauschreduktion in Bildsignalen geeignet. Das Ziel einer Teilbandzerlegung ist die Extraktion/Ausfilterung von Bildelementen/Bilddetails mit speziellen Eigenschaften. Die Anwendung von linearen Filtern führt bei der Bandaufspaltung zu Teilbändern, die sich hinsichtlich der enthaltenen Frequenzkomponenten unterscheiden. Insbesondere im Falle einer Teilbandzerlegung zur Rauschreduktion ist diese Art der Signalaufspaltung hinderlich, da typische Bildinhalte neben anderen Elementen aus sehr vielen Kanten bestehen, die sich ihrerseits aus sehr vielen unterschiedlichen Frequenzkomponenten zusammensetzen. Die Folge ist, dass Signalanteile einer Kante in viele unterschiedliche Bänder gelangen und dadurch die Unterscheidung zwischen Rausch- und Signalanteilen sehr erschwert wird. Dieses führt dazu, dass im Kantenbereich entweder keine Rauschreduktion durchgeführt werden kann, oder dass Signalanteile der Kante als Rauschen erkannt und folglich aus dem Signal entfernt werden.

Diese Probleme treten bei einer nicht-linearen Teilbandzerlegung, bei welcher die Kanten eines Bildsignals nicht in viele kleine Anteile zerlegt werden, sondern als ganzes in einem Teilband erhalten bleiben, nicht auf. Eine derartige nichtlineare Teilbandzerlegung unter Verwendung einer Filterbank mit Medianfiltern ist beispielsweise in [11] beschrieben und wird anhand von Figur 1 näher erläutert. Der grundsätzliche Aufbau und die Funktion eines Medianfilters ist beispielsweise in [14] beschrieben. Quadratische Medianfilter zur Bildverarbeitung sind beispielsweise in [15] beschrieben.

Das in Figur 1 dargestellte Filter weist K quadratische Medianfilter mit ansteigender Größe auf, denen jeweils das Bildsignal S(x, y) zugeführt ist. Die K Medianfilter weisen eine unterschiedliche Filterlänge bzw. Filtergröße auf, das heißt sie berücksichtigen bei der Ermittlung des Ausgangssignalwertes zu einem beliebigen Bildpunkt Signalwerte von unterschiedlich vielen Bildpunkten aus der Umgebung des beliebigen Bildpunktes. Hierbei ist zu berücksichtigen, dass die Filterlänge/Filtergröße mit der Anzahl K der verwendeten Medianfilter ansteigt.

Am Ausgang des Filters stehen K+1 Signale zur Verfügung, was einer Zerlegung des Bildsignals in K+1 Teilbänder entspricht. Diese K+1 Signale umfassen das Ausgangssignal des K-ten Medianfilters, Differenzsignale, die aus den Ausgangssignalen jeweils benachbarter Medianfilter gebildet sind, sowie ein Differenzsignal, das aus dem ursprünglichen Bildsignal und dem Ausgangssignal des ersten Medianfilters gebildet ist.

Das Signal am Ausgang jedes der Medianfilters zeichnet sich dadurch aus, dass es das ursprüngliche Bildsignal beinhaltet, bei dem Bilddetails mit der halben Ausdehnung des Medianfilters unterdrückt werden. Außerdem wird die Rauschleistung im Bildsignal durch Anwendung von Medianfiltern verringert. Für das in Figur 1 dargestellte Filter bedeutet dies, dass die Signale am Ausgang der Medianfilter mit steigendem K immer weniger Bilddetails enthalten und ebenfalls immer stärker vom Rauschen befreit werden. Die Bildung der Differenz der Ausgangssignale der Medianfilter führt daher zu Ausgangssignalen des Gesamtfilters, die nur Bilddetails enthalten, die das kleinere der beiden Medianfilter, aus deren Ausgangssignalen ein Differenzsignal gebildet wird, gerade noch passieren können, die vom größeren der beiden Medianfilter aber bereits unterdrückt werden. Die Ausgangssignale des Gesamtfilters enthalten weiterhin Rauschanteile, die Beiträge in diesem Größenbereich haben, die in ihrer Amplitude aber stark begrenzt sind.

Zusammenfassend ergeben sich am Ausgang des Filters gemäß Figur 1 Signale, die jeweils ein Teilband des Frequenzspektrums des Bildsignals repräsentieren und die jeweils zu Bildelementen unterschiedlicher Größe korrespondieren und die bei einem verrauschten Bildsignal noch Rauschanteile mit geringer Amplitude besitzen.

Der Nachteil der in Figur 1 dargestellten Bandaufspaltung mittels paralleler Medianfilter unterschiedlicher Länge ist, dass die Größe der Filtermaske mit der Anzahl K der Medianfilter, das heißt mit der Stufenzahl zunimmt. So wurde beispielsweise vorgeschlagen die Größe einer quadratischen Filtermaske mit der Stufenzahl exponentiell zunehmen zu lassen. Dies erfordert allerdings einen großen Aufwand bei der Bestimmung der Medianwerte.

Um diesen Aufwand zu reduzieren, wurde vorgeschlagen die erforderliche Filtergröße und Datenmenge durch eine stufenweise Unterabtastung der Signale zu reduzieren. In [12] und [13] sind nichtlineare Pyramidenzerlegungen beschrieben, die auf Medianfiltern und morphologischen Operatoren basieren. Allerdings besitzt eine Rauschreduktion auf Basis einer Pyramidenzerlegung den Nachteil, dass diese Verfahren nicht verschiebungsinvariant sind, sodass es zu phasenabhängigen Störungen im resultierenden Bild kommt. Außerdem kommt hinzu, dass für die Synthese der Pyramidensignale in der genannten Literatur eine Polynomapproximation vorgeschlagen wird, durch die es im Kantenbereich zu den gleichen Problemen kommt, wie dies bei linearen Teilbandzerlegungsverfahren der Fall ist.

Weitere Verfahren zur nicht-linearen Teilbandzerlegung, die insbesondere im Kantenbereich bessere Eigenschaften als lineare Teilbandzerlegungsfilter besitzen, umfassen neben einer Teilbandzerlegung unter Anwendung von Medianfiltern eine Wavelet-Zerlegung mit signaladaptivem Lifting, die beispielsweise in [8], [9] oder [10] beschrieben ist.

Wegen des hohen Aufwandes und der Eigenschaften der Teilbänder sind diese genannten Verfahren nur bedingt für eine Teilbandzerlegung, das heißt eine Unterteilung des Bildsignals in unterschiedliche Teilsignale, die verschiedene Frequenzbänder des Bildsignals repräsentieren, einsetzbar.

Ziel der vorliegenden Erfindung ist es daher, eine Vorrichtung und ein Verfahren zur Teilbandzerlegung von Bildsignalen zur Verfügung zu stellen die/das mit geringem Aufwand realisierbar ist und die oben genannten Nachteile nicht aufweist.

Dieses Ziel wird durch eine Vorrichtung gemäß den Merkmalen des Anspruchs 1 und durch ein Verfahren gemäß der Merkmale des Anspruchs 12 gelöst.

Die Erfindung basiert auf einer Kaskadierung von Medianfiltern. Hierzu weist die erfindungsgemäße Vorrichtung eine Kaskade mit n aufeinanderfolgenden Medianfiltern auf, die jeweils einen Eingang und einen Ausgang aufweisen, wobei $n \geq 2$ ist und wobei dem Eingang eines ersten Medianfilters das Bildsignal zugeführt ist und wobei der Eingang jedes dem ersten Medianfilter nachfolgenden Medianfilters an den Ausgang des jeweils vorherigen Medianfilters der Kaskade angeschlossen ist. Zur Bildung von Teilbandsignalen aus Ausgangssignalen der Medianfilter sind Verknüpfungselemente vorhanden, die jeweils wenigstens zwei Eingänge und einen Ausgang aufweisen, wobei jedem der Eingänge ein Ausgangssignal eines der Medianfilter oder das Bildsignal zugeführt ist und wobei an dem Ausgang ein Teilbandsignal zur Verfügung steht.

Bei einer Ausführungsform der Erfindung ist vorgesehen, dass n Verknüpfungselemente vorgesehen sind, wobei einem ersten Verknüpfungselement das Bildsignal und ein Ausgangssignal eines ersten Medianfilters zugeführt ist und wobei den anderen Verknüpfungselementen Ausgangssignale von jeweils zwei Medianfiltern zugeführt sind. Diese zwei Medianfilter, deren Ausgangssignale einem Verknüpfungselement zugeführt sind, sind bei einer Ausführungsform der Erfindung zwei in der Kaskade aufeinander folgende Medianfilter.

Die Verknüpfungselemente sind vorzugsweise Subtrahier, die das Ausgangssignal des ersten Filters von dem Bildsignal und das Ausgangssignal eines Medianfilters von dem Ausgangssignal eines anderen in der Kaskade vorher angeordneten Medianfilters zur Bildung von Teilbandsignalen subtrahieren.

Neben den Ausgangssignalen der n Subtrahierer liefert auch das letzte Medianfilter in der Kaskade ein Teilbandsignal, so dass mit einer Anordnung mit n Medianfiltern und n Subtrahierern n+1 Teilbandsignale erzeugbar sind.

Wie hinlänglich bekannt und beispielsweise in [14] oder [15] erläutert ist, werden bei einem Medianfilter zur Bildung eines Filterausgangsignalwertes zu einem Bildpunkt neben dem Eingangssignalwert dieses Bildpunktes die Signalwerte weiterer Bildpunkte berücksichtigt, wobei die Signalwerte der Größe nach sortiert und der mittlere Signalwert der sortierten Signalwertfolge als Filterausgangswert ausgegeben wird. Medianfilter besitzen die vorteilhafte Eigenschaft, dass Kantenverläufe in einem Bild nach Filterung des Bildsignals mit einem Medianfilter erhalten bleiben, dass aber Bilddetails, das heißt abgegrenzte Bildbereiche abhängig von der Filtergröße, ausgeblendet ("ausgefiltert") werden können. Die Filtergröße bezeichnet dabei die Anzahl der Signalwerte die bei der Filterung berücksichtigt werden.

Die Medianfilter sind bei einer Ausführungsform der Erfindung derart .ausgebildet, dass sie bei der Ermittlung eines Ausgangswertes für einen Bildpunkt neben dem Eingangssignalwert für diesen Bildpunkt Eingangswerte von Bildpunkten berücksichtigen, die in einer kreuzförmigen Anordnung um diesen Bildpunkt liegen, wobei sich die Achsen des Kreuzes ausgehend von dem Bildpunkt in horizontaler und vertikaler Richtung zu beiden Seiten des Bildpunktes erstrecken. Die Berücksichtigung nur der Bildpunkte, die auf den Achsen eines Kreuzes liegen, anstelle der Berücksichtigung aller Bildpunkte, die beispielsweise in einem Quadrat oder einem Kreis um einen bestimmten Bildpunkt liegen, reduziert den Aufwand bei der Implementierung des Filters und den Rechenaufwand. Selbstverständlich sind im Zusammenhang mit der Erfindung aber auch Medianfilter einsetzbar, die Bildpunkte berücksichtigen, die in einer ringförmigen Anordnung um den Bildpunkt, zu dem ein Filterausgangswert berechnet wird, liegen.

Die erfindungsgemäße Kaskadierung ermöglicht, dass in den Medianfiltern bei der Erzeugung eines Filterausgangswertes zu einem gegebenen Bildpunkt die Signalwerte von Bildpunkten berücksichtigt werden, deren Abstand zu dem gegebenen Bildpunkt von Filter zu Filter unterschiedlich ist. Dadurch können in den einzelnen Filterstufen unterschiedlich große Bilddetails gefiltert werden.

Bei einer Ausführungsform, bei der die berücksichtigten Bildpunkte kreuzförmig um einen gegebenen Bildpunkt liegen, ermöglicht die erfindungsgemäße Kaskadierung, dass in den Medianfiltern bei der Erzeugung eines Filterausgangswertes zu einem gegebenen Bildpunkt die Signalwerte von Bildpunkten berücksichtigt werden, deren Abstand in vertikaler und horizontaler Richtung zu dem gegebenen Bildpunkt von Filter zu Filter unterschiedlich ist, ohne jedoch den Rechenaufwand und den Aufwand bei der Implementierung der Medianfilter von Filter zu Filter in der Kaskade zu steigern. So ist bei einer Ausführungsform der Erfindung vorgesehen, dass neben dem Eingangssignalwert eines gegebenen Bildpunktes die Signalwerte von vier Bildpunkten berücksichtigt werden, die auf den Achsen eines Kreuzes mit Schnittpunkt in dem gegebenen Bildpunkt liegen und die in den vier Achsrichtungen jeweils gleich weit von dem gegebenen Bildpunkt entfernt sind.

Der Abstand der berücksichtigten, symmetrisch um den gegebenen Bildpunkt angeordneten Bildpunkte nimmt dabei von Filter zu Filter in der Kaskade zu.

Jedes dieser Medianfilter ist dabei in der Lage Bilddetails mit bestimmten Abmessungen auszufiltern, wobei diese Abmessungen abhängig sind von dem Abstand der bei der Medianfilterung berücksichtigten Bildpunkte von dem gegebenen Bildpunkt. Die kaskadierten Medianfilter sind dabei so ausgebildet, dass die Größe der durch die einzelnen Medianfilter ausgefilterten Bilddetails von Filter zu Filter in der Kaskade zunimmt. Da jedem Medianfilter, mit Ausnahme des ersten Medianfilters der Kaskade ein Ausgangssignal eines vorgeschalteten Medianfilters zugeführt ist, erhalten diese Medianfilter Eingangssignale, in denen die durch die vorherigen Medianfilter ausgefilterten Bilddetails nicht mehr enthalten sind. Jedes Medianfilter der Kaskade muss damit nur auf die Filterung von Bilddetails einer bestimmten Größe ausgelegt sein, was die Anzahl der zu berücksichtigenden Bildpunkte bei der Medianfilterung in der genannten Weise reduziert.

Durch Bilden der Differenz zwischen Ausgangssignalen aufeinander folgender Medianfilter werden Teilbandsignale erzeugt, die nur solche Bilddetails enthalten, die ein Filter der Kaskade noch passieren und durch ein diesem Filter nachgeschaltetes Filter ausgefiltert werden.

Bei der Ausführungsform, bei der jeweils gleich viele Signalwerte - von Bildpunkten mit von Filter zu Filter unterschiedlichem Abstand von einem gegebenen Bildpunkt - für die Bildung eines Ausgangssignalwertes in den einzelnen Medianfiltern herangezogen werden, kann das Bildsignal mittels der erfindungsgemäßen Vorrichtung hinsichtlich Bilddetails unterschiedlicher Größen analysiert werden, ohne dass ein steigender Aufwand in den einzelnen Stufen/ Medianfiltern der Kaskade erforderlich ist. Die Größe der unterschiedlichen Bilddetails, die analysiert werden können, ist von der Anzahl der Medianfilter in der Kaskade abhängig. Die erfindungsgemäße Vorrichtung bewirkt eine Bandaufspaltung des Bildsignals auf Basis kaskadierter und gewichteter Medianfilter, wobei die Teilbänder vergleichbare Eigenschaften aufweisen. Signalanteile, mit einer zur Stufenzahl korrespondierenden Größe werden in die jeweiligen Teilbänder abgetrennt.

Die erfindungsgemäße Vorrichtung zur Teilbandzerlegung eignet sich insbesondere zur Rauschunterdrükkung bei Bildsignalen. Hierzu werden die Teilbandsignale Rauschunterdrückungseinheiten zugeführt, wobei Ausgangssignale dieser Rauschunterdrückungseinheiten zur Bildung eines rauschunterdrückten Bildsignals addiert werden.

Die Rauschunterdrückung erfolgt beispielsweise mittels Rauschunterdrückungseinrichtungen, die eine Softcoring-Kennlinie implementieren, bei denen Signale mit einer Amplitude die innerhalb eines gegebenen Intervalls liegen, unterdrückt werden, während andere Signalwerte die Rauschunterdrückungseinrichtung passieren.

Die Teilbandzerlegung mittels der erfindungsgemäßen Vorrichtung führt zu Signalen, die neben Rauschen noch Signalanteile von Bildelementen enthalten, deren Größe mit den jeweiligen Medianfilterausdehnungen korrespondiert. Die Tatsache, dass durch diese Art der Bandaufspaltung die Bildelemente nicht mehr wie bei einer linearen Bandaufspaltung in mehrere Teilbänder aufgeteilt werden, sondern weitgehend mit voller Kantensteilheit in nur einem Band verbleiben, erlaubt eine einfache Unterscheidung zwischen Nutzsignal und Rauschen anhand der Signalamplitude. Außerdem weisen die Signale der Teilbänder in Bereichen, in denen kein Signalanteil vorliegt, einen Erwartungswert von Null auf. Als Folge davon lässt sich die Rauschreduktion auf einfache Weise durch eine Rauschunterdrükkungseinrichtung mit einer Coring-Kennlinie durchführen.

Die vorliegende Erfindung wird nachfolgend anhand eines Ausführungsbeispiels in Figuren näher erläutert. In den Figuren zeigt:

Figur 1 eine Vorrichtung zur Teilbandzerlegung nach dem Stand der Technik,

Figur 2 eine erfindungsgemäße Vorrichtung zur Teilbandzerlegung mit kaskadierten Medianfiltern,

Figur 3 rechteckförmiger Ausschnitt eines Bildbereiches zur Erläuterung der erfindungsgemäßen Vorrichtung und des erfindungsgemäßen Verfahrens,

Figur 4 Veranschaulichung der Koeffizienten der einzelnen Medianfilter der Kaskade anhand von Gewichtungsmatrizes,

Figur 5 Vorrichtung zur Rauschunterdrückung bei einem Bildsignal, die eine erfindungsgemäße Vorrichtung zur Teilbandzerlegung und Rauschunterdrückungseinheiten, denen Teilbandsignale zugeführt sind, aufweist,

Figur 6 Kennlinie einer Rauschunterdrückungseinheit nach Figur 5,

Figur 7 Beispiele weiterer Gewichtungsmatrizes.

In den Figuren bezeichnen, sofern nicht anders angegeben, gleiche Bezugszeichen gleiche Teile mit gleicher Bedeutung.

Figur 2 zeigt ein Ausführungsbeispiel einer erfindungsgemäßen Vorrichtung zur Teilbandzerlegung eines Bildsignals S(x,y). Die dargestellte Vorrichtung weist eine Kaskade mit n Medianfiltern M1, M2, M3 auf, wobei in dem dargestellten Beispiel n=3 ist. Die Medianfilter M1, M2, M3 weisen jeweils einen Eingang und einen Ausgang auf. Einem ersten Medianfilter M1 ist dabei das Bildsignal S(x,y) zugeführt. Die Eingänge der dem ersten Medianfilter nachgeschalteten Medianfilter M2, M3 sind jeweils an den Ausgang des vorherigen Medianfilters M1, M2 angeschlossen, so dass ein Ausgangssignal F1(x,y) des ersten Medianfilters dem Eingang des zweiten Medianfilters M2 und ein Ausgangssignal F2(x,y) des zweiten Medianfilters M2 dem Eingang des dritten Medianfilters M3 zugeführt ist.

Die dargestellte Vorrichtung weist in dem Beispiel weiterhin n=3 Subtrahierer SUB1, SUB2, SUB3 mit jeweils zwei Eingängen und einem Ausgang auf, wobei Teilbandsignale T1(x,y), T2(x,y), T3(x,y) an den Ausgängen der Subtrahierer SUB1, SUB2, SUB3 anliegen. Ein weiteres Teilbandsignal T4(x,y) steht am Ausgang des letzten Medianfilters M3 in der Kaskade zur Verfügung. Ein erster Subtrahierer SUB1 bildet das erste Teilbandsignal T1(x,y) aus der Differenz des Bildsignals S(x,y) und das Ausgangssignal F1(x,y) des ersten Medianfilters M1. Die Teilbandsignale T2(x,y), T3 (x,y) werden entsprechend aus den Differenzen der Ausgangssignale F1(x,y), F2(x,y), F3(x,y) jeweils zweier aufeinanderfolgender Medianfilter M1, M2, M3 gebildet.

Die grundsätzliche Funktionsweise eines Medianfilters wird nachfolgend kurz anhand eines rechteckförmigen Bildausschnitts in Figur 3 erläutert. Das Bild ist aus einer Vielzahl von Bildpunkten aufgebaut, die durch ihre Koordinaten in horizontaler Richtung (x-Richtung) und in vertikaler Richtung (y-Richtung) bestimmt sind und denen jeweils ein Signalwert zugeordnet ist. Dieser Signalwert kann ein Helligkeitswert oder ein Farbwert sein. Das Bildsignal S(x,y) enthält eine Abfolge der Signalwerte dieser Bildpunkte, wobei das Bildsignal ein Luminanzsignal, das Helligkeitswerte enthält, oder ein Chrominanzsignal, das Farbwerte enthält, sein kann.

Das Medianfilter erzeugt zu jedem Signalwert $S(x_0, y_0)$ eines beliebigen Bildpunktes $(x_0, y_0)$ einen Filterausgangswert, wobei neben dem Signalwert $S(x_0,y_0)$ dieses Bildpunktes $(x_0,y_0)$ bei der Bildung das Ausgangswertes Signalwerte benachbarter Bildpunkte $S(x_0 \pm a, y_0 \pm b)$, wobei a, b ganze Zahlen sind, berücksichtigt werden. Das Medianfilter sortiert die Signalwerte der berücksichtigten Bildpunkte der Größe nach und gibt als Ausgangswerte den mittleren der der Größe nach sortierten Signalwerte aus.

Wie nachfolgend noch erläutert wird, erlaubt die Kaskadenanordnung die Verwendung von Medianfiltern, die neben dem Signalwert des Bildpunktes $(x_0,y_0)$ weitere Bildpunkte berücksichtigen, deren Abstand von dem Bildpunkt $(x_0,y_0)$ von Filter zu Filter zunimmt.

Bei einer Ausführungsform der Erfindung vorgesehen, Medianfilter zu verwenden, die bei der Erzeugung eines Ausgangswertes zu einem beliebigen Bildpunkt $(x_0,y_0)$ neben dem Signalwert $S(x_0,y_0)$ dieses Bildpunktes nur solche Bildpunkte zu berücksichtigen die einer kreuzförmigen Bildpunktanordnung um den Bildpunkt $(x_0,y_0)$ entstammen, also die Signalwerte zu Bildpunkten, die auf zwei Geraden durch den Bildpunkt $(x_0,y_0)$ liegen, wobei diese Geraden insbesondere eine horizontale Gerade mit Bildpunkten $(x_0 \pm a, y_0)$ und eine vertikale Gerade mit Bildpunkten $(x_0, y_0 \pm b)$ sind.

Bei einer Ausführungsform werden nur vier weitere Bildpunkte berücksichtigt die auf den Achsen der kreuzförmigen Anordnung jeweils gleich weit von dem Bildpunkt entfernt sind, wobei der Abstand der berücksichtigten Bildpunkte von dem Bildpunkt $(x_0,y_0)$ von Filter zu Filter unterschiedlich ist und ausgehend von dem ersten Medianfilter M1, dem das Bildsignal zugeführt ist, von Filter zu Filter zunimmt.

Anhand von Figur 4 werden nun Beispiele von Gewichtungsmatrizes der Medianfiltern bei einer erfindungsgemäßen Kaskade von Medianfiltern, wie sie beispielsweise in den Figuren 2 und 5 dargestellt ist, erläutert.

Eine Gewichtungsmatrix gibt im vorliegenden Fall allgemein wieder, von welchen Bildpunkten Signalwerte bei der Medianfilterung berücksichtigt werden sollen und wie die Signalwerte dieser Bildpunkte vor der Filterung, das heißt vor dem Sortieren der Größe nach, gewichtet werden sollen.

Bei dem in Figur 4 dargestellten Beispiel besitzen die Matrizes nur an den äußeren Enden einer kreuzförmigen Anordnung Gewichtungsfaktoren ungleich Null, das heißt nur Bildpunkte einer kreuzförmigen Anordnung werden bei der Filterung berücksichtigt, die Gewichtungsfaktoren außerhalb des Kreuzes sind Null. Der Gewichtungsfaktor am Kreuzungspunkt repräsentiert die Gewichtung des Signalwertes eines beliebigen Bildpunktes, beispielsweise des Bildpunktes ($x_0$,$y_0$) gemäß Figur 3, zu dem ein Filterausgangswert erzeugt wird. Die übrigen Gewichtungsfaktoren repräsentieren die Gewichtungsfaktoren für weitere bei der Medianfilterung berücksichtigte Bildpunkte.

Das erste Medianfilter M1 mit einer Filtermatrix gemäß Figur 4 berücksichtigt bei der Bildung des Ausgangswertes neben dem Signalwert eines Bildpunktes ($x_0$,$y_0$) Signalwerte der Bildpunkte ($x_{0+1}$,$y_0$), ($x_0$-1,$y_0$), ($x_0$,$y_0$+1) und ($x_0$,$y_0$-1), also Signalwerte, die auf den Achsen jeweils um einen Bildpunkt von dem beliebigen Bildpunkt ($x_0$,$y_0$) entfernt sind.

Hebt sich der Signalwert des Punktes ($x_0$,$y_0$) von den Signalwerten der ihn umgebenden Bildpunkte, also auch der Bildpunkte ($x_0$+1,$y_0$), ($x_0$-1,$y_0$), ($x_0$,$y_0$+1) und ($x_0$,$y_0$-1) ab, so wird durch die Medianfilterung der Signalwert des Bildpunktes ($x_0$,$y_0$) im Ausgangssignal durch den Signalwert eines der Bildpunkte ($x_0$+1,$y_0$), ($x_0$-1,$y_0$), ($x_0$,$y_0$+1) und ($x_0$,$y_0$-1) ersetzt. Ein Bilddetail - also ein sich von der Umgebung abhebender Bildbereich mit einer abgegrenzten Ausdehnung - das eine Ausdehnung von nur einem Bildpunkt umfasst, wird durch das erste Medianfilter damit unterdrückt oder herausgefiltert, während Bilddetails, die eine Ausdehnung von mehr als einem Bildpunkt haben, nicht herausgefiltert werden.

Das erste Teilbandsignal T1(x,y) gemäß Figur 2 das aus der Differenz des Bildsignals S(x,y) und des ersten Filtersignals F1(x,y) gebildet ist, enthält damit Bilddetails mit einer Ausdehnung von einem Bildpunkt, während sich die Signalanteile größerer Bilddetails, die auch in dem ersten Filtersignal F1(x,y) noch enthalten sind, durch die Differenzbildung aufheben.

Das zweite Medianfilter M2 berücksichtigt bei der Bildung des Ausgangswertes neben dem Signalwert eines beliebigen Bildpunktes ($x_0$,$y_0$) Signalwerte der Bildpunkte ($x_0$+2,$y_0$), ($x_0$-2,$y_0$), ($x_0$,$y_0$+2) und ($x_0$,$y_0$-2), also Signalwerte, die auf den Achsen jeweils um zwei Bildpunkte von dem beliebigen Bildpunkt ($x_0$,$y_0$) entfernt sind. Dieses zweite Medianfilter M2 filtert Bilddetails aus, die eine vertikale und horizontale Ausdehnung von zwei und weniger Bildpunkten haben. Das zweite Teilbandsignal T2(x,y), das gemäß Figur 2 aus der Differenz des ersten Filtersignals F1(x,y) und des zweiten Filtersignals F2(x,y) gebildet ist, enthält damit Bilddetails mit einer Ausdehnung von zwei Bildpunkten, während sich die Signalanteile größerer Bilddetails, die sowohl in dem ersten als auch in dem zweiten Filtersignal F1 (x,y) noch enthalten sind, durch die Differenzbildung aufheben. Bilddetails mit einer Ausdehnung von nur einem Bildpunkt sind in dem zweiten Teilbandsignal T2(x,y) nicht enthalten, da diese bereits durch das erste Medianfilter ausgefiltert wurden.

Das dritte Medianfilter M3 berücksichtigt bei der Bildung des Ausgangswertes neben dem Signalwert eines beliebigen Bildpunktes ($x_0$,$y_0$) Signalwerte der Bildpunkte ($x_0$+3,$y_0$), ($x_0$-3,$y_0$), ($x_0$,$y_0$+3) und ($x_0$,$y_0$-3), also Signalwerte, die auf den Achsen jeweils um drei Bildpunkte von dem beliebigen Bildpunkt ($x_0$,$y_0$) entfernt sind, und das vierte Medianfilter M4 berücksichtigt bei der Bildung des Ausgangswertes neben dem Signalwert eines beliebigen Bildpunktes ($x_0$,$y_0$) Signalwerte der Bildpunkte ($x_0$+4,$y_0$), ($x_0$-4,$y_0$), ($x_0$,$y_0$+4) und ($x_0$,$y_0$-4), also Signalwerte, die auf den Achsen jeweils um vier Bildpunkte von dem beliebigen Bildpunkt ($x_0$,$y_0$) entfernt sind. Damit filtert das dritte Medianfilter Bilddetails aus, die eine vertikale und horizontale Ausdehnung von drei Bildpunkten und weniger haben, und das vierte Medianfilter filtert Bilddetails aus, die eine vertikale und horizontale Ausdehnung von vier Bildpunkten und weniger haben. Das dritte Teilbandsignal T3(x,y), das aus der Differenz des zweiten Filtersignals F2(x,y) und des dritten Filtersignals F3(x,y) gebildet ist, enthält damit Bilddetails mit einer Ausdehnung von drei Bildpunkten, während sich die Signalanteile größerer Bilddetails, die sowohl in dem ersten als auch in dem zweiten Filtersignal F2(x,y) noch enthalten sind, durch die Differenzbildung aufheben. Bilddetails mit einer Ausdehnung von weniger als drei Bildpunkten sind in dem dritten Teilbandsignal T3(x,y) nicht enthalten, da diese bereits durch die vorherigen Medianfilter M1, M2 in der Kaskade ausgefiltert wurden.

Entsprechend enthält ein viertes Teilbandsignal Bilddetails mit einer Ausdehnung von vier Bildpunkten, während sich die Signalanteile größerer Bilddetails, durch die Differenzbildung aufheben. Bilddetails mit einer Ausdehnung von weniger als vier Bildpunkten sind in dem vierten Teilbandsignal nicht enthalten, da diese bereits durch die vorherigen Medianfilter M1, M2, M3 in der Kaskade ausgefiltert wurden.

Alle Bilddetails mit einer Ausdehnung von mehr als drei bzw. vier Bildpunkten sind in dem Ausgangssignal des letzten Medianfilters, des Filters M3 in Figur 2 und des Filters M4 in Figur 5 enthalten, das als ein Teilbandsignal ausgegeben wird.

Allgemein lassen sich mit einer Kaskade mit n Medianfiltern n+1 Teilbandsignale erzeugen, die jeweils Bilddetails mit einer bestimmten Ausdehnung enthalten, wobei zur Verringerung des Rechenaufwandes jedes Medianfilter neben dem Signalwert S($x_0$,$y_0$) eines beliebigen Bildpunktes ($x_0$,$y_0$) vorzugsweise die Signalwerte von nur vier weiteren Bildpunkten ($x_0$+k,$y_0$), ($x_0$k,$y_0$), ($x_0$,$y_0$+k) und ($x_0$,$y_0$-k) berücksichtigt, wobei k ein ganze Zahl ist und wobei sich der Abstand k bei zwei aufeinanderfolgenden Medianfiltern vorzugsweise um 1 unterscheidet. Die Ausdehnung der Bilddetails, die durch das jeweilige Filter unterdrückt werden, beträgt dann k. Der Abstand der bei der Medianfilterung berücksichtigten Bildpunkte von dem Bildpunkt, zu dem in dem jeweiligen Filterschritt ein Filterausgangswert ermittelt wird, nimmt von Filter zu Filter vorzugsweise um einen Bildpunkt zu, so dass die von Filter zu Filter ausgefilterten Bilddetails sich in ihren Abmessungen um jeweils einen Bildpunkt unterscheiden.

Aufgrund der Differenzbildung zwischen zwei Filterausgangssignalen zur Bildung eines Teilbandsignals enthält das jeweilige Teilbandsignal nur solche Bilddetails, die ein Filter der Kaskade noch passieren und durch das nächste Filter der Kaskade ausgefiltert werden.

Bei einer Ausführungsform ist vorgesehen, die in den Medianfiltern bei der Erzeugung des Ausgangssignals berücksichtigten Bildpunktwerte vor der Sortierung der Größe nach unterschiedlich zu gewichten. So kann der Signalwert des zentralen Bildpunktes ($x_0$,$y_0$) stärker als die umliegenden Bildpunkte ($x_0$+k,$y_0$), ($x_0$-k,$y_0$), ($x_0$,$y_0$+k) und ($x_0$, $y_0$-k) gewichtet werden.

Die erfindungsgemäße Kaskadierung der Medianfilter ermöglicht es, dass die einzelnen Medianfilter nur zur Filterung solcher Bilddetails ausgelegt werden müssen, die in dem Filtereingangssignal sicher noch enthalten sind, die also durch die vorgeschalteten Medianfilter noch nicht ausgefiltert wurden. Dies reduziert den Schaltungsaufwand bzw. den Rechenaufwand bei den einzelnen Filtern und ermöglicht die Verwendung von Gewichtungsmatrizes, bei denen der Abstand der berücksichtigten Bildpunkte von Filter zu Filter in der Kaskade ausgehend von dem ersten Filter M1 zunimmt, ohne bei der kreuzförmigen Anordnung gemäß Figur 4 die Anzahl der berücksichtigten Bildpunkte zu erhöhen.

Selbstverständlich sind beliebige weitere Gewichtungsmatrizes verwendbar, bei denen der Abstand der bei der Medianfilterung berücksichtigten Bildpunkte von dem gegebenen Bildpunkt von Filter zu Filter zunimmt. Neben Bildpunkten, die auf einem Kreuz mit horizontalen und vertikalen Achsen liegen, wie dies in Figur 4 dargestellt ist, können die Bildpunkt auch auf einer kreuzförmigen Anordnung in beliebiger Lage, beispielsweise einem diagonalen Kreuz liegen, wobei bei einem diagonalen Kreuz neben dem Signalwert des beliebigen Bildpunktes ($x_0$,$y_0$) Signalwerte der Bildpunkte ($x_0$+k,$y_0$+k), ($x_0$+k,$y_0$-k), ($x_0$k,$y_0$+k) und ($x_0$-k,$y_0$-k) berücksichtigt werden.

Des weiteren können die bei der Medianfilterung berücksichtigten Bildpunkte auch ringförmig um den beliebigen Bildpunkt ($x_0$,$y_0$) angeordnet sein, wobei der Ring eine beliebige Form (insbesondere annähernd rund oder rechteckig) aufweisen kann und wobei der Abstand des Rings von dem Bildpunkt ($x_0$,$y_0$), zu dem ein Filterausgangswert ermittelt wird, von Filter zu Filter zunimmt. Bei dieser Ausführungsform nimmt die Anzahl der berücksichtigten Bildpunkte wegen des größer werdenden Ringumfangs von Filter zu Filter zu.

Die erfindungsgemäße Vorrichtung, die eine Aufspaltung des Bildsignals in Teilbandsignale, die Bilddetails unterschiedlicher Auflösungen enthalten, bewirkt, eignet sich insbesondere zur Verwendung in einer Vorrichtung zur Rauschunterdrückung. Eine derartige Vorrichtung ist in Figur 5 dargestellt.

Die Vorrichtung weist eine Kaskade mit n=4 Medianfiltern M1, M2, M3, M4 auf, die insbesondere eine Gewichtungsmatrix der oben beschriebenen Art aufweisen können. Die durch Differenzbildung zweier Filterausgangssignale F1, F2, F3, F4 oder Differenzbildung des ersten Filterausgangssignals F1 und des Bildsignals S erhaltenen Teilbandsignale T1(x,y), T2(x,y), T3(x,y) und T4(x,y) sind bei dieser Vorrichtung Rauschunterdrückungseinheiten R1, R2, R3, R4 zugeführt, an deren Ausgängen jeweils rauschunterdrückte Teilbandsignale T1'(x,y), T2'(x,y), T3'(x,y) und T4'(x,y) anliegen, die aufaddiert und zu dem Filterausgangssignal F4(x,y) des letzten Medianfilters in der Kaskade addiert werden, um ein rauschunterdrücktes Bildsignal S'(x,y) zu bilden.

Die Rauschunterdrückungseinheiten R1, R2, R3, R4 besitzen beispielsweise eine Übertragungskennlinie der in Figur 6 dargestellten Form. Für ein Ausgangssignal g(x) gilt dabei

$$g(x) = \begin{cases} x - x_c & \text{für } x > x_c \\ 0 & \text{für } -x_c \leq x \leq x_c \\ x + x_c & \text{für } x < x_c. \end{cases}$$

Signale mit einer Amplitude kleiner als $x_c$ werden also unterdrückt, da angenommen werden dass es sich hierbei um Rauschsignale handelt.

Diese einfache Art der Rauschunterdrückung ist bei den Teilbandsignale, die mittels der Vorrichtung zur Teilbandzerlegung erhalten werden, besonders effektiv. Denn, die Teilbandzerlegung führt zu Signalen, die neben Rauschen noch Signalanteile von Bildelementen/Bilddetails enthalten, deren Größe/Ausdehnung mit den jeweiligen Medianfilterausdehnungen - das heißt dem Abstand zwischen dem zentralen beliebigen Bildpunkt ($x_0$, $y_0$) und den weiterhin berücksichtigten Bildpunkten - korrespondiert. Die Tatsache, dass durch diese Art der Bandaufspaltung die Bildelemente nicht mehr wie bei einer linearen Bandaufspaltung in mehrere Teilbänder aufgeteilt werden, sondern weitgehend mit voller Kantensteilheit in nur einem Band verbleiben, erlaubt eine einfache Unterscheidung zwischen Nutzsignal und Rauschen anhand der Signalamplitude. Außerdem weisen die Signale der Teilbänder in Bereichen, in denen kein Signalanteil vorliegt, einen Erwartungswert von Null auf. Als Folge davon lässt sich die Rauschreduktion durch die Anwendung einer sogenannten Coring-Kennlinie, wie sie in Figur 6 gezeigt ist, durchführen. Untersuchungen in diesem Zusammenhang haben gezeigt, dass die Anwendung einer Softcoring-Kennlinie mit Softcoring sehr gute Ergebnisse liefert. Die Wahl der Schwellwerte $x_c$ richtet sich dabei nach der Streubreite in den einzelnen Teilbändern. Dabei sollten die Schwellwerte den zweifachen Wert der Rauschstreubreite des korrespondierenden Bandes nicht überschreiten. Die Rauschreduktion wird dadurch erreicht, dass insbesondere die Rauschanteile in den Differenzbändern kleine Signalamplituden besitzen, wohingegen die Bildelemente durch diese Art der Aufspaltung große Amplituden aufweisen.

Zusammenfassend ermöglicht die erfindungsgemäße Vorrichtung eine effektive Teilbandzerlegung bei geringem Aufwand. Die Reduzierung des Aufwands für die Bestimmung des Ausgangswertes der einzelnen Medianfilter der Kaskade wir hierbei dadurch erreicht, dass die einzelnen Medianfilterstufen durch eine geeignete Gewichtung möglichst wenig Eingangswerte berücksichtigen, wie oben erläutert wurde.

Selbstverständlich sind als Medianfilter beliebige weitere Medianfilter einsetzbar, die orthogonal zueinander sind, bei denen vorherige Medianfilter also Signalanteile passieren lassen, die erst durch ein nachfolgendes Filter der Kaskade ausgefiltert werden.

Die Kaskadierung der Medianfilter ermöglicht es, dass die einzelnen Medianfilter nur zur Filterung solcher Bilddetails ausgelegt werden müssen, die in dem Filtereingangssignal sicher noch enthalten sind, die also durch die vorgeschalteten Medianfilter noch nicht ausgefiltert wurden. Dies reduziert den Schaltungsaufwand bzw. den Rechenaufwand bei den einzelnen Filtern.

Anhang

Stand der Technik

[1] Lee, J.S.: Digital Image Smoothing and the Sigma Filter. Computer Vision Graphics Image Processing. Vol. 24, S. 255 -269, 1983

[2] Tekalp, M.A.: Digital Video Processing. Prentice-Hall, 1995

[3] de Haan, G., T.G. Kwaaitsaal-Spassova, M. Larragy und O.A. Ojo: Memory Integrated Noise Reduction IC for Television. IEEE Trans. on Consumer Electronics, Vol. 42, No.2,S. 175- 181, Mai 1996

[4] Schröder, H. und H. Blume: Mehrdimensionale Signalverarbeitung -Band 2. B.G.Teubner, 2000

[5] Lebowski, F.: Bildschärfeverbesserung von hochaufgelösten Festbildern. VDI Verlag,1993

[6] Rossi, J.P.: Digital Technique for Reducing Television Noise. SMPTE Journal, Vol. 87, S.134- 140, März 1978

[7] Burt, P.J. und E.H. Adelson: The Laplacian pyramid as a compact image code. IEEETrans. on Communications, Vol. 31, S. 532 -540, 1983

[8] Claypoole,- R.L., G. Davis, W. Sweldens und R. Baraniuk: Nonlinear Wavelet Transforms for Image Coding via Lifting. Submitted to IEEE Transactions on Image Processing,1999

[9] Heijmans, H.J.A.M. und J. Goutsias: Nonlinear Multiresolution Signal Decomposition Schemes: Part II: Morphological Wavelets. IEEE Trans. on Image Processing, Vol. 9, No.11,2000

[10] Piella, G. und H.J.A.M. Heijmans: Adaptive Lifting Schemes with Perfect Reconstruction. Research Report PNA-R0104, Centrum voor Wiskundeen Informatica(CWI),2001

[11] Salembier, P. und M. Kunt: Size-sensitive multiresolution decomposition of images with rank order based filters. Signal Processing, Vol. 27, No.2, S. 205 -241, 1992

[12] Cha, H. und L.F. Chaparro: Adaptive Morphological Representation of Signals: Polynomial and Wavelet Methods. Multidimensional Systems and Signal Processing, Vol.8, S. 249- 271, 1997

[13] Donoho, D.L. und T. P. Y. Yu: Nonlinear "Wavelet Transforms" Based on Median-Interpolation. SIAM Journal on Math. Anal., Vol. 31, No.5

[14] Helmut Schönfelder: Digitale Filter in der Videotechnik. Drei-R-verlag, Berlin, 1988, Seiten 125-127.

[15] Rosenfeld, Kak: Digital Picture Processing. Academic Press, Inc., 2nd edition, 1982, Seiten 261 bis 263.

**Patentansprüche**

1. Vorrichtung zur Teilbandzerlegung eines Bildsignals (S), die folgende Merkmale aufweist:

   - eine Kaskade mit n aufeinanderfolgenden Medianfiltern (M1, M2, M3, M4), wobei $n \geq 2$ ist, die jeweils einen Eingang und einen Ausgang aufweisen, wobei dem Eingang eines ersten Medianfilters (M1) das Bildsignal (S) zugeführt ist und wobei der Eingang jedes dem ersten Medianfilter (M1) nachfolgenden Medianfilters (M2, M3, M4) an den Ausgang des jeweils vorherigen Medianfilters (M1, M2, M3) der Kaskade angeschlossen ist,

   - wenigstens ein Verknüpfungselement (SUB1, SUB2, SUB3, SUB4), das wenigstens zwei Eingänge und einen Ausgang aufweisen, wobei jedem der Eingänge ein Ausgangssignal eines der Medianfilter (M1, M2, M3, M4) oder das Bildsignal (S) zugeführt ist und wobei an dem Ausgang ein Teilbandsignal (S1, S2, S3, S4) zur Verfügung steht.

2. Vorrichtung nach Anspruch 1, die n Verknüpfungselemente (SUB1, SUB2, SUB3, SUB4) aufweist, wobei einem Verknüpfungselement (SUB1) das Bildsignal (S) und ein Ausgangssignal eines Medianfilters (M1) zugeführt ist und wobei den anderen Verknüpfungselementen (SUB2, SUB3, SUB4) Ausgangssignale (F1, F2, F3, F4) von jeweils zwei Medianfiltern (M2, M3, M4) zugeführt sind.

3. Vorrichtung nach Anspruch 2, bei der den Verknüpfungselementen die Ausgangssignale (F1, F2, F3, F4) von jeweils zwei aufeinanderfolgenden Medianfiltern (M2, M3, M4) zugeführt sind.

4. Vorrichtung nach einem der Ansprüche 1 bis 3, bei der die Verknüpfungselemente (SUB1, SUB2, SUB3, SUB4) als Subtrahierer ausgebildet sind.

5. Vorrichtung nach einem der vorangehenden Ansprüche, bei der n+1 Teilbandsignale (T1, T2, T3, T4, T5) zur Verfügung stehen, die jeweils durch Ausgangssignale der Verknüpfungselemente (SUB1, SUB2, SUB3, SUB4) und das Filterausgangssignal (F3; F4) des letzten Medianfilters (M3; M4) in der Kaskade gebildet sind.

6. Vorrichtung nach einem der vorangehenden Ansprüche, bei der die Medianfilter (M1, M2, M3, M4) jeweils derart ausgebildet sind, dass sie bei der Ermittlung eines Filterausgangswertes für einen beliebigen Bildpunkt ($x_0$, $y_0$) neben einem Filtereingangswert $S(x_0, y_0)$ für diesen Bildpunkt ($x_0$, $y_0$) Eingangswerte von Bildpunkten berücksichtigen, die um den beliebigen Bildpunkt ($x_0$, $y_0$) angeordnet sind.

7. Vorrichtung nach Anspruch 6, bei der ein Abstand der berücksichtigten Bildpunkte von dem Bildpunkt ($x_0$, $y_0$) von Medianfilter zu Medianfilter in der Kaskade zunimmt.

8. Vorrichtung nach einem der vorangehenden Ansprüche, bei der die Medianfilter (M1, M2, M3, M4) jeweils derart ausgebildet sind, dass sie bei der Ermittlung eines Filterausgangswertes für einen beliebigen Bildpunkt ($x_0$, $y_0$) neben einem Filtereingangswert $S(x_0, y_0)$ für diesen Bildpunkt ($x_0$, $y_0$) Eingangswerte von Bildpunkten berücksichtigen, die in einer kreuzförmigen Anordnung um den beliebigen Bildpunkt ($x_0$, $y_0$) liegen.

9. Vorrichtung nach Anspruch 8, bei der die Bildpunkte, deren Signalwerte neben dem Filtereingangswert $S(x_0, y_0)$ für den beliebigen Bildpunkt ($x_0$, $y_0$) für die Bildung des Filterausgangswertes zu dem Bildpunkt ($x_0$, $y_0$) berücksichtigt werden, bei den einzelnen Medianfiltern (M1, M2, M3, M4) in horizontaler und vertikaler Richtung einen Abstand zu dem Bildpunkt ($x_0$, $y_0$) haben, der von Filter zu Filter unterschiedlich ist.

10. Vorrichtung nach Anspruch 9, bei der der Bildpunktabstand für aufeinanderfolgende Medianfilter (M1, M2, M3, M4) ausgehend von dem ersten Medianfilter (M1) zunimmt.

11. Vorrichtung nach Anspruch 10, bei der die Medianfilter jeweils gleich viele Signalwerte von Bildpunkten bei der Ermittlung eines Filterausgangswertes zu einem beliebigen Bildpunkt ($x_0$, $y_0$) berücksichtigen.

**12.** Vorrichtung nach Anspruch 10, bei der die Medianfilter neben dem Filtereingangswert $S(x_0, y_0)$ eines Bildpunktes $(x_0, y_0)$ die Signalwerte $S(x_0+k,y_0)$, $S(x_0-k,y_0)$, $S(x_0,y_0+k)$ und $S(x_0,y_0-k)$ von vier anderen Bildpunkten $(x_0+k,y_0)$, $(x_0-k,y_0)$, $(x_0,y_0+k)$ und $(x_0,y_0-k)$ berücksichtigen, die bei einer kreuzförmigen Anordnung in horizontaler und vertikaler Richtung jeweils gleich weit von dem Bildpunkt $(x_0, y_0)$ entfernt sind.

**13.** Vorrichtung zur Rauschunterdrückung bei Bildsignalen, die eine Vorrichtung zur Teilbandzerlegung gemäß einem der Ansprüche 1 bis 10 aufweist, wobei wenigstens einige der Teilbandsignale (T1, T2, T3, T4) Rauschunterdrükkungseinheiten (R1, R2, R3, R4) zugeführt sind und wobei Ausgangssignale der Rauschunterdrückungseinheiten (R1, R2, R3, R4) für die Bildung eines Ausgangssignals (S') addiert werden.

**14.** Verfahren zur Teilbandzerlegung eines Bildsignals das folgende Merkmale aufweist:

- Filtern des Bildsignals (S) mittels n kaskadierter Medianfilter (M1, M2, M3, M4), wobei $n \geq 2$ ist, indem das Bildsignal (S) mittels eines ersten Medianfilters (M1) gefiltert wird und indem Filterausgangssignale (F1, F2, F3, F4) von n-1 Medianfiltern (M1, M2, M3) mittels eines nachgeschalteten Medianfilters (M2, M3, M4) gefiltert werden,

- Erzeugen wenigstens eines Teilbandsignals (T1, T2, T3, T4) durch Verknüpfen des Bildsignals (S) mit wenigstens einem Filterausgangssignal (F1) und/oder durch Verknüpfen von wenigstens zwei Filterausgangssignalen (F1, F2, F3, F4).

**15.** Verfahren nach Anspruch 14, bei dem das Bildsignal (S) und ein Ausgangssignal eines Medianfilters (M1) zu einem Teilbandsignal (T1) verknüpft werden und bei dem Filterausgangssignale (F1, F2, F3, F4) von wenigstens zwei Medianfiltern (M1, M2, M3, M4) zu Teilbandsignalen (T1, T2, T3, T4) verknüpft werden.

**16.** Verfahren nach Anspruch 15, bei dem Ausgangssignale (F1, F2, F3, F4) von jeweils zwei aufeinanderfolgenden Medianfiltern (M2, M3, M4) zu Teilbandsignalen (T2, T3, T4) verknüpft werden.

**17.** Verfahren nach einem der Ansprüche 14 bis 16, bei der das Ausgangssignal (F1) des ersten Medianfilters (M1) von dem Bildsignal (S) zur Bildung eines ersten Teilbandsignals (T1) subtrahiert wird und bei dem Filterausgangssignale (F1, F2, F3, F4) aufeinanderfolgender Medianfilter (M1, M2, M3, M4) zur Bildung von Teilbandsignalen (T2, T3, T4) voneinander subtrahiert werden.

**18.** Verfahren einem Ansprüche 14 bis 17, bei dem n+1 Teilbandsignale (T1, T2, T3, T4, T5) aus dem Bildsignal und den Filterausgangssignalen (F1, F2, F3, F4) gebildet werden.

**19.** Verfahren nach einem der Ansprüche 14 bis 18 bei dem die Medianfilter (M1, M2, M3, M4) jeweils derart ausgebildet sind, dass sie bei der Ermittlung eines Filterausgangswertes für einen beliebigen Bildpunkt $(x_0, y_0)$ neben einem Filtereingangswert $S(x_0, y_0)$ für diesen Bildpunkt $(x_0, y_0)$ Eingangswerte von Bildpunkten berücksichtigen, die um den beliebigen Bildpunkt $(x_0, y_0)$ angeordnet sind.

**20.** Verfahren nach einem der Ansprüche 14 bis 19 bei dem ein Abstand der berücksichtigten Bildpunkte von dem Bildpunkt $(x_0, y_0)$ von Medianfilter zu Medianfilter in der Kaskade zunimmt.

**21.** Vorrichtung nach einem der Ansprüche 14 bis 20, bei der die Medianfilter (M1, M2, M3, M4) jeweils derart ausgebildet sind, dass sie bei der Ermittlung eines Filterausgangswertes für einen beliebigen Bildpunkt $(x_0, y_0)$ neben einem Filtereingangswert $S(x_0, y_0)$ für diesen Bildpunkt $(x_0, y_0)$ Eingangswerte von Bildpunkten berücksichtigen, die in einer kreuzförmigen Anordnung um den beliebigen Bildpunkt $(x_0, y_0)$ liegen.

**22.** Vorrichtung nach Anspruch 21, bei der die Bildpunkte, deren Signalwerte neben dem Filtereingangswert $S(x_0, y_0)$ für den beliebigen Bildpunkt $(x_0, y_0)$ für die Bildung des Filterausgangswertes zu dem Bildpunkt $(x_0, y_0)$ berücksichtigt werden, bei den einzelnen Medianfiltern (M1, M2, M3, M4) in horizontaler und vertikaler Richtung einen Abstand zu dem Bildpunkt $(x_0, y_0)$ haben, der von Filter zu Filter unterschiedlich ist.

**23.** Vorrichtung nach Anspruch 22, bei der der Bildpunktabstand für aufeinanderfolgende Medianfilter (M1, M2, M3, M4) ausgehend von dem ersten Medianfilter (M1) zunimmt.

**24.** Vorrichtung nach Anspruch 23, bei der die Medianfilter jeweils gleich viele Signalwerte von Bildpunkten bei der Ermittlung eines Filterausgangswertes zu einem beliebigen Bildpunkt ($x_0$, $y_0$) berücksichtigen.

**25.** Vorrichtung nach Anspruch 24, bei der die Medianfilter neben dem Filtereingangswert S($x_0$, $y_0$) eines Bildpunktes ($x_0$, $y_0$) die Signalwerte S($x_0$+k,$y_0$), S($x_0$-k,$y_0$), S($x_0$,$y_0$+k) und S($x_0$,$y_0$-k) von vier anderen Bildpunkten ($x_0$+k,$y_0$), ($x_0$-k,$y_0$), ($x_0$,$y_0$+k) und ($x_0$,$y_0$-k) berücksichtigen, die bei einer kreuzförmigen Anordnung in horizontaler und vertikaler Richtung jeweils gleich weit von dem Bildpunkt ($x_0$, $y_0$) entfernt sind.

FIG 1 (Stand der Technik)

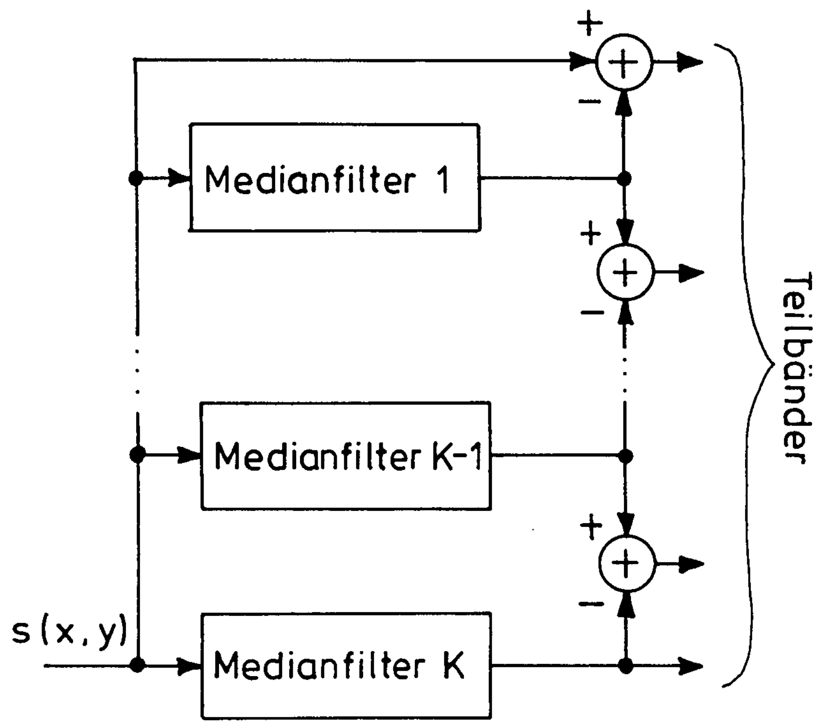


FIG 2

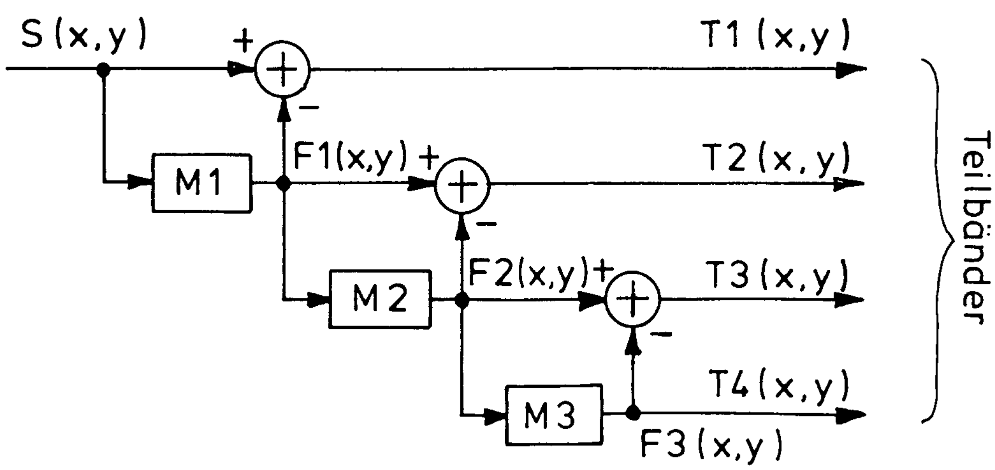

FIG 3

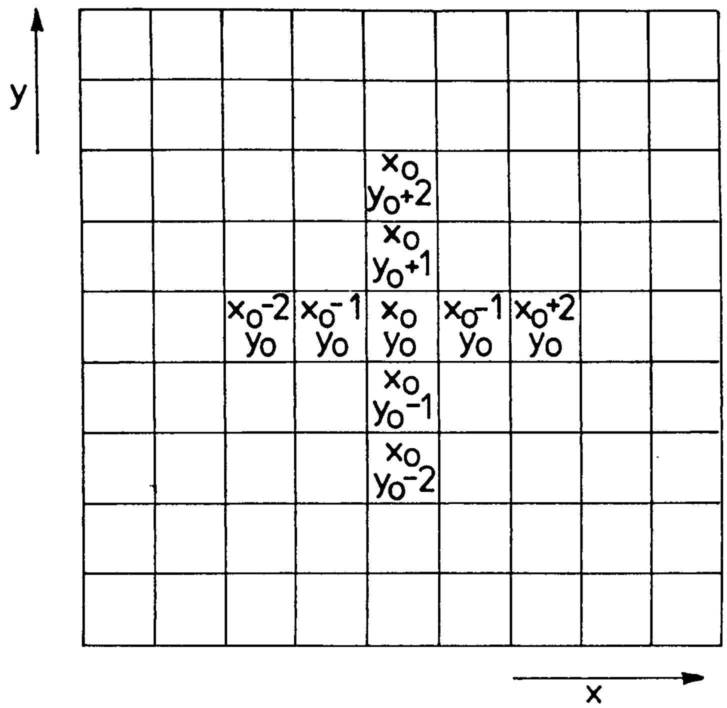
y
x
$x_0$ $y_0+2$
$x_0$ $y_0+1$
$x_0-2$ $y_0$
$x_0-1$ $y_0$
$x_0$ $y_0$
$x_0+1$ $y_0$
$x_0+2$ $y_0$
$x_0$ $y_0-1$
$x_0$ $y_0-2$

FIG 4

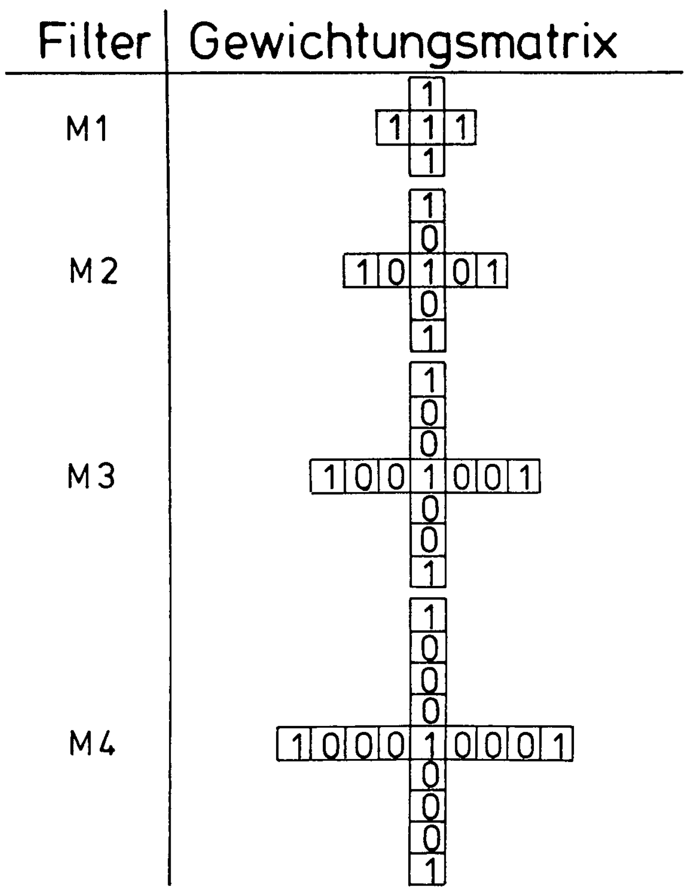
Filter
Gewichtungsmatrix
M1
1
1 1 1
1
M2
1
0
1 0 1 0 1
0
1
M3
1
0
0
1 0 0 1 0 0 1
0
0
1
M4
1
0
0
0
1 0 0 0 1 0 0 0 1
0
0
0
1

FIG 5

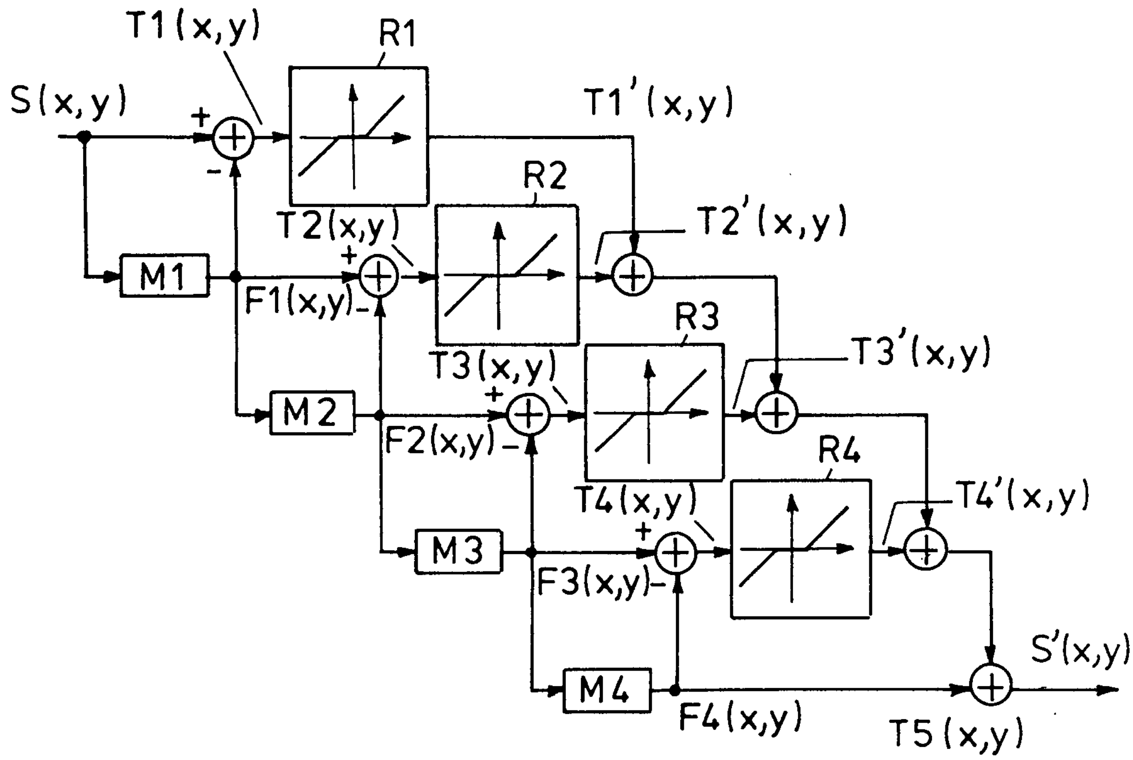
T1(x,y)
R1
S(x,y)
T1'(x,y)
R2
T2(x,y)
T2'(x,y)
M1
F1(x,y)
R3
T3(x,y)
T3'(x,y)
M2
F2(x,y)
R4
T4(x,y)
T4'(x,y)
M3
F3(x,y)
S'(x,y)
M4
F4(x,y)
T5(x,y)

FIG 6

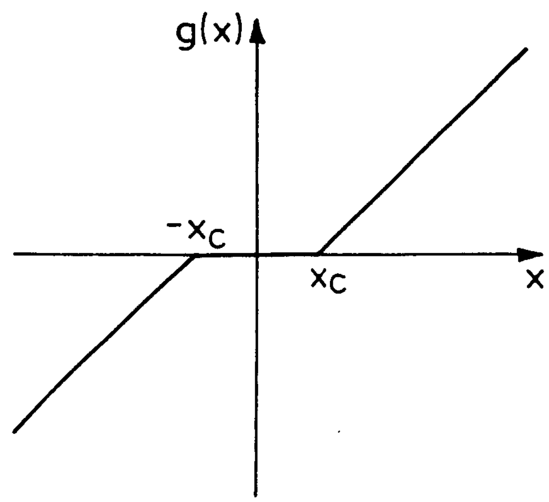
g(x)
-xc
xc
x